# EUROPEAN PATENT APPLICATION

(11) **EP 4 848 013 A1**
(43) Date of publication of application: **02.12.2026**
(21) Application number: 26176827.9
(22) Date of filing: 06.05.2026
(51) Int. Cl.: G05B 19/042, G05B 19/418, H04L 12/40

(54) **ENVIRONMENTAL MONITORING ON A HIGH AVAILABLE DISTRIBUTED CONTROL SYSTEM**

(30) Priority: 27.05.2025 US 202519219461
(71) Applicant: Schneider Electric Systems USA, Inc., Foxborough, MA 02035 (US)
(72) Inventor: MAGU, Ashish, Foxboro, 02035 (US)
(74) Representative: Openshaw & Co.

(57) **Abstract**

Apparatus and associated methods relate to monitoring temperature and humidity of a field junction box while providing a communications interface between a Field Control Processor (FCP) and a plurality of field sensors and/or actuators. A System Communications Module (SCM) baseplate receives an indication of a set of addresses associated with commands to be decoded by the SCM baseplate. Each of a plurality of electrical terminals are associated with a corresponding address in the indicated set of addresses, and each is configured to electrically connect to a corresponding one of the plurality of field sensors and/or actuators. The SCM baseplate is configured to decode and transmit commands that are associated with the indicated set of addresses. Temperature and humidity sensors connected to the SCM baseplate generate signals indicative of the environment and send the signals to the SCM baseplate without using any of the plurality of the electrical terminals.

## Description

### BACKGROUND

Process control relates to system and methods to monitor and control continuous processes using controlled field devices, such as field sensors and actuators. Automating such processes enhances the smooth running, repeatability, and safety of such processes and the resulting products. Such automation also ensures that energy is used efficiently for transforming raw materials into high-quality finished products with reliable consistency while reducing energy waste and economic costs.

Some industrial processes can be complicated with expansive remote industrial processing sites. Such complicated industrial control processes can have numerous processing steps, which are monitored and controlled by a great many field sensors and actuators, some of which can be geographically located at great distances from a process-control facility configured to interface with such sensors and actuators.

At such remote process-control facilities, field junction boxes can be used to house control electronics that provide a communications interface between a Field Control Processor (FCP) and a plurality of field sensors and/or actuators. The environment within such field junction boxes can be hot, humid, or otherwise harsh.

### SUMMARY

Some embodiments relate to a field junction box for providing a communication interface between a Field Control Processor (FCP) and a plurality of field devices, the plurality of field devices comprising two or more devices selected from the group consisting of field sensors and actuators. The field junction box includes a System Communications Module (SCM) baseplate, the SCM baseplate having an address selection switch that is configured to indicate a set of addresses associated with commands to be decoded by the SCM baseplate. The field junction box includes one or more Universal Input/Output Module (UIOM) baseplates connected to the SCM baseplate. The one or more UIOM baseplates have a plurality of electrical terminals, each electrical terminal of the plurality of electrical terminals associated with a corresponding address in the indicated set of addresses, each configured to electrically connect to a corresponding one of the plurality of field devices. The SCM baseplate is configured to: i) receive communications from the FCP, the communications including the commands associated with addresses within the indicated set of addresses; ii) decode the commands that are associated with the addresses within the indicated set of addresses; and iii) transmit the decoded commands to the one or more UIOM baseplates. The field junction box includes a temperature sensor connected to the SCM baseplate and configured to generate a temperature signal indicative of a temperature of an environment within the field junction box. The temperature sensor is further configured to send the temperature signal to the SCM baseplate without using any of the plurality of the electrical terminals.

Some embodiments relate to a field junction box for providing a communication interface between a Field Control Processor (FCP) and a plurality of field devices, the plurality of field devices comprising two or more devices selected from the group consisting of field sensors and actuators. The field junction box includes a System Communications Module (SCM) baseplate configured to receive an indication of a set of addresses associated with commands to be decoded by the SCM baseplate. The field junction box includes a plurality of electrical terminals, each associated with a corresponding address in the indicated set of addresses, each configured to electrically connect to a corresponding one of the plurality of field devices. The SCM is configured to: i) receive communications from the FCP, the communications including the commands associated with addresses within the indicated set of addresses; ii) decode the commands that are associated with the addresses within the indicated set of addresses; and iii) transmit the decoded commands to corresponding ones of the field devices via the plurality of electrical terminals. The field junction box includes a temperature sensor connected to the SCM baseplate and configured to generate a temperature signal indicative of a temperature of an environment within the field junction box. The temperature sensor is further configured to send the temperature signal to the SCM baseplate without using any of the plurality of the electrical terminals.

Some embodiments relate to a method for monitoring temperature of a field junction box that houses a System Communications Module (SCM) baseplate. In the method, a set of addresses associated with commands to be decoded by the SCM baseplate is indicated. Each of addresses within the indicated set of addresses is associated with a corresponding one of a plurality of electrical terminals of one or more Universal Input/Output Module (UIOM) baseplates connected to the SCM baseplate. Each of the plurality of electrical terminals is configured to electrically connect to a corresponding one of the plurality of field devices. Communications from a Field Control Processor (FCP) are receiving via the SCM baseplate. The received communications include the commands associated with addresses within the indicated set of addresses. The commands that are associated with the addresses within the indicated set of addresses are decoded via the SCM baseplate. The decoded commands are transmitted to the one or more UIOM baseplates via the SCM baseplate. A temperature signal indicative of a temperature of an environment within the field junction box is generated via a temperature sensor connected to the SCM baseplate. The temperature sensor is further configured to send the temperature signal to the SCM baseplate without using any of the plurality of the electrical terminals.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Moreover, where considered appropriate, reference labels have been repeated among the figures to indicate corresponding or analogous elements. In the figures:
FIG. 1 is a schematic diagram of an example of a process control system having flexible configurability of communications routing.
FIG. 2 is a front view of an example of a junction box that houses electronics configured to facilitate control of a process.
FIG. 3 is a front view of a quad-mode system communications module (SCM) baseplate configured in a quad-mode configuration.
FIG. 4 is a front view of a star-mode SCM baseplate configured in a star-mode configuration.
FIG. 5 is a front view of a remote-mode SCM baseplate with environment sensing capability and configured in a remote-mode configuration.
FIG. 6 is a front view of a Universal Input/Output Module (UIOM) baseplate for translating commands to and from field sensors and actuators.
FIG. 7 is a perspective view of examples of small form-factor pluggable (SFP) modules.
FIG. 8 is a block diagram of an example of a field junction box with environmental monitoring capability.
FIG. 9 is a flow chart of a method for monitoring temperature and humidity of a field junction box while providing a communications interface between a Field Control Processor (FCP) and a plurality of field sensors and/or actuators.

### DETAILED DESCRIPTION

Apparatus and associated methods relate to monitoring temperature and humidity in a field junction box that provides a communications interface between a Field Control Processor (FCP) and a plurality of field devices, including but not limited to field sensors and/or actuators. For many processes, especially processes that use many field sensors and actuators, the large number of field sensors and/or actuators can use most or all of a set of addresses assigned to the process sensors and actuators connected to the field junction box. In such situations, measuring temperature or humidity of the field junction box can require using temperature and humidity sensors that use one or more addresses that otherwise could be used for process sensors and/or actuators. Such a tradeoff can have negative consequences in terms of processing capability, cost, and complexity. By equipping the process interface with temperature and humidity sensors that are directly connected to the interface and not connected as a normal process sensor with an addressable interface, no such tradeoff need be made.

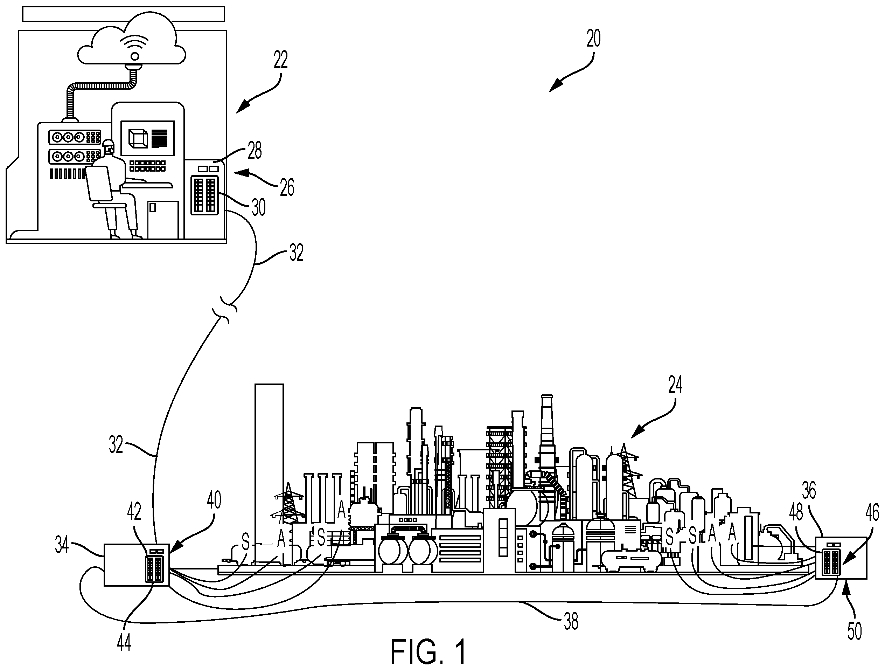

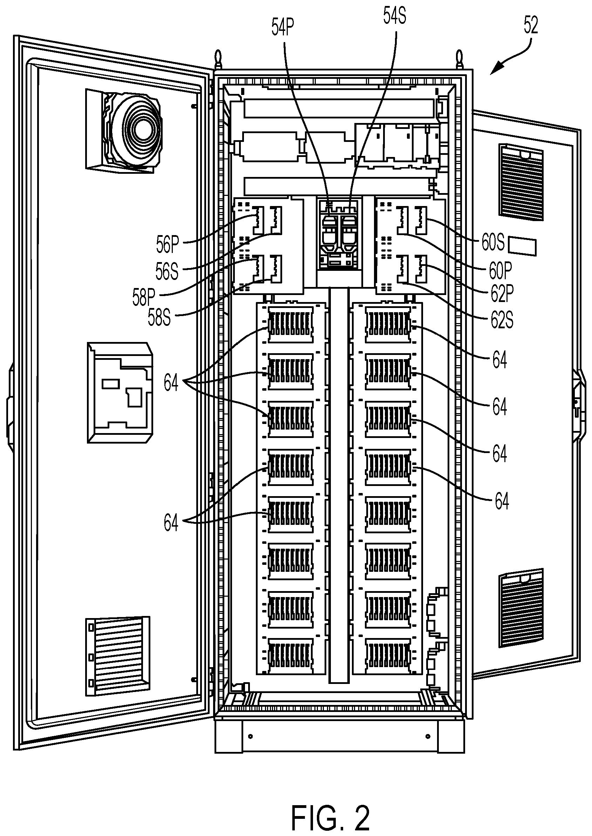

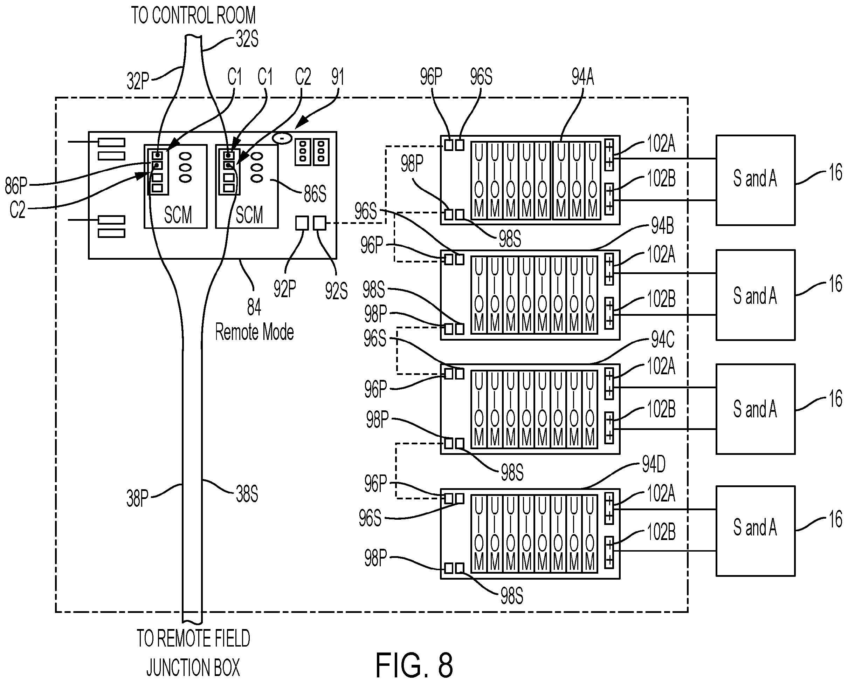

Field junction boxes may be equipped with various electronic components that are configured to provide a communications interface between the FCP and the plurality of field sensors and/or actuators. Below, an overview of industrial process control will be described, with reference to FIG. 1. Then, the electronic components typically used in field junction boxes will be described with reference to FIGS. 2-7. Then with reference to FIGS. 8-9, temperature and humidity monitoring of such field junction boxes will be described. Such descriptions will focus on how the temperature and humidity sensors are located within the field junction box, how the temperature and humidity sensors are electrically connected, and how the signals generated by the temperature and humidity sensors are processed.

FIG. 1 is a schematic diagram of an example of a process control system having flexible configurability of communications routing. In FIG. 1, industrial process 20 is controlled from control room 22 but is performed at industrial processing site 24, which is at a location remote from control room 22. Within control room 22 is control-room junction box 26, which houses Field Control Processor (FCP) 28 and first System Communications Module (SCM) 30. FCP 28 is configured to control the operation of industrial process 20 by generating communications that include commands addressed to field sensors S and actuators A, which monitor and perform various operations of industrial process 20, respectively. Such field sensors S and actuators A are located at industrial processing site 24, where industrial process 20 is physically and/or chemically performed. Because field sensors S and actuators A are located at industrial processing site 24, the communications generated by FCP 28 are transmitted from control room 22 to industrial processing site 24, where the commands addressed to field sensors S and actuators A will ultimately be relayed thereto. First SCM 30 is configured to facilitate communications between control room 22 and industrial processing site 24.

Communications between control room 22 and industrial processing site 24 can be performed via electrical conductors, or optical fibers, or using combinations thereof. For transmissions that are performed over long distances (e.g., over distances measured in kilometers), such communications are typically performed optically over optical fiber but not limited thereto. For transmissions that are performed over short distances (e.g., over distances not greater than 60 meters), such communications are typically performed electrically over copper conductors, but not limited thereto. Because control room 22 is located at a great distance from industrial processing site 24 in the depicted embodiment, first optical fiber 32 is used for communications therebetween. To perform such optical communications over first optical fiber 32, first SCM 30 is configured to receive the communications generated by FCP 28. First SCM 30 then transmits, via first optical fiber 32, the communications received from FCP 28 to first process-control facility 34, which is located at industrial processing site 24. Similarly, first SCM 30 receives communications transmitted from first process-control facility 34 and then transmits the communications received to FCP 28. In this way, first optical fiber 32 conveys bidirectional communications between control room 22 and industrial processing site 24.

Some industrial processes can be complicated with expansive and remote industrial processing sites, such as industrial processing site 24 in the depicted embodiment. Such complicated industrial processes can have numerous processing steps, which are monitored and controlled by a great many field sensors S and actuators A, some of which can be geographically located at great distances from first process-control facility 34. The distances from first process-control facility 34 to some of field sensors S and actuators A can exceed a specified communications distance for conductive communications. To provide communications to field sensors S and actuators A, which are located at a great distance from first process-control facility 34, second process-control facility 36 can be situated near such field sensors S and actuators A. Thus, first process-control facility 34 is connected to and configured to provide commands addressed to (and from) those field sensors S and actuators A located within a specified distance therefrom. Second control facility 36 is connected to and configured to provide commands addressed to those field sensors S and actuators A located at distances greater than the specified distance from first control facility 34 but within the specified distance of second control facility 36. Because first and second process-control facilities 34 and 36 are located at a distance greater than the specified distance from one another, communications therebetween are optically performed over second optical fiber 38.

Within first process-control facility 34 is first field junction box 40, which houses second SCM 42 as well as first Universal Input/Output Modules (UIOMs) 44. Second SCM 42 is configured to receive optical communications from first SCM 30 over first optical fiber 32. Second SCM 42 is also configured to perform at least two additional functions. As a first additional function, SCM 42 is configured to relay the communications received from first SCM 30 over first optical fiber 32 to second process-control facility 36 via second optical fiber 38. As a second additional function, second SCM 42 is configured to transmit a subset of the commands contained in the received communications to field sensors S and actuators A that are connected to first field junction box 40. To determine which of the commands are addressed to such field sensors S and actuators A that are connected to first field junction box 40, second SCM 42 receives an indication of a set of addresses that correspond to such field sensors S and actuators A connected thereto. Second SCM 42 decodes the communications to identify a subset of the commands that correspond to the set of addresses indicated. Second SCM 42 then transmits the subset of the commands to the field sensors S and actuators A that are connected to first field junction box 40 via first UIOMs 44.

First UIOMs 44 provide a plurality of individually configurable control channels for the plurality of field sensors S and actuators A. Each of the plurality of individually configurable control channels can be configured to translate the commands to a sensor/actuator protocol corresponding to a corresponding one of the field sensors S and/or actuators A connected to first field junction box 40. Because second SCM 42 can transmit commands addressed to sensors S and actuators A as well as relay communications that include commands addressed to distant field sensors S_{distant} and actuators A_{distant} connected to another field junction box at another process-control facility (e.g., second process-control facility 36), additional optical fiber need not be directly run between control room 22 and second process-control facility 36. Such dual functionality of second SCM 42 provides flexibility and cost savings, as long runs of optical fiber can be expensive and time consuming to provide.

Within second process-control facility 36 is second field junction box 46, which houses third SCM 48 as well as second UIOMs 50. Third SCM 48 is configured to receive optical communications from second SCM 42 over second optical fiber 38. Third SCM 48 is configured to then transmit a subset of the commands contained in the received communications to field sensors S and actuators A that are connected to second field junction box 46. To determine which of the commands are addressed to such field sensors S and actuators A that are connected to second field junction box 46, third SCM 48 receives an indication of a set of addresses that correspond to such field sensors S and actuators A connected thereto. Third SCM 48 decodes the communications to identify a subset of the commands that correspond to the set of addresses indicated. Third SCM 48 then transmits the subset of the commands to the field sensors S and actuators A that are connected to second field junction box 46, via second UIOMs 50. Second UIOMs 50 are configured to provide a plurality of individually configurable control channels between third SCM 48 and the field sensors S and actuators A that are connected to second field junction box 46.

FIG. 2 is a front view of an example of a junction box that houses electronics configured to facilitate control of a process. Junction boxes can be used to house electronic components that perform the various functions of process control pertaining to the process being controlled. Therefore, junction boxes, such as junction box 52 depicted in FIG. 2, can be used for any or all of junction boxes 26, 40, and 46, which are depicted in FIG. 1. Each of junction boxes 26, 40 and 46 would likely include different variations of electronic components, including different combinations of components than those depicted in FIG. 2. In FIG. 2, junction box 52 is configured both with components typically found in a control room as well as components that are located near the process being controlled. Such a configuration might be provided for a junction box located in a control room located relatively near where the process is being performed, for example.

In FIG. 2, junction box 52 includes primary and secondary FCPs 54P and 54S. Primary and secondary FCPs 54P and 54S provide redundant control of a process such that the process can be maintained in an event in which one of primary and secondary FCPs 54P and 54S enters a failed state or otherwise becomes inoperative. Junction box 52 also includes eight SCMs: primary and secondary first SCMs 56P and 56S; primary and secondary second SCMs 58P and 58S; primary and secondary third SCMs 60P and 60S; and primary and secondary fourth SCMs 62P and 62S. Again, pairs of primary and secondary SCMs 56P/56S, 58P/58S, 60P/60S, and 62P62 provide redundant operation such that the process can be maintained in an event in which one of the primary or secondary SCMs becomes inoperative. Junction box 52 also includes a plurality of UIOMs 64, which are configured to provide a plurality of individually configurable control channels for a plurality of field sensors S and/or actuators A connected to junction box 52. UIOMs 64 can also be paired in primary/secondary fashion so as to provide redundant operation of the process. Because field sensors S and/or actuators A are connected to junction box 52, junction box 52 is configured for operation in a process-control facility near a processing site. Junction box 52 can be equipped in various other configurations, some of which are better suited for operation with a control room that is remote from a processing site, and others which are better suited for operation in a process-control facility at the processing site. These various configurations will be described below with reference to subsequent figures.

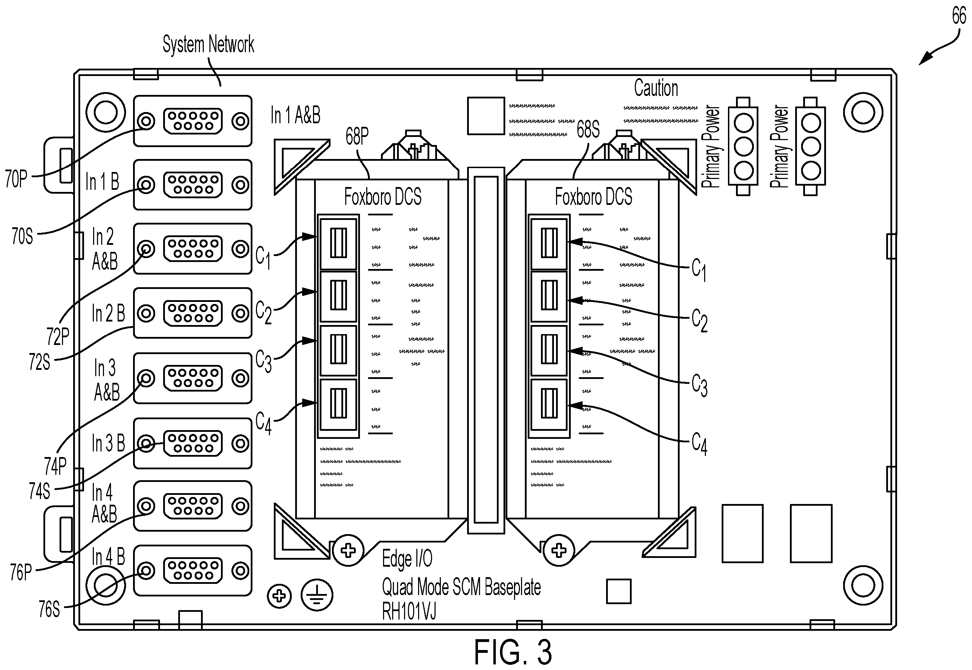

FIG. 3 is a front view of quad-mode system communications module (SCM) baseplate 66 configured in a quad-mode configuration. The quad-mode configuration can be used to facilitate communications over four bus channels that an FCP, such as FCP 54P and/or FCP 54S (depicted in FIG. 2), can use for providing communications to field sensors S and/or actuators A. Each bus channel can be configured to address a predetermined number of field sensors S and/or actuators A *(e.g.,* each bus channel can address 256 different devices). In FIG. 3, quad-mode SCM baseplate 66 includes primary SCM 68P and secondary SCM 68S connected to quad-mode SCM baseplate 66. Primary SCM 68P and secondary SCM 68S, in some embodiments, can be connected to quad-mode SCM baseplate 66 via connectors, so that should one of primary and second SCMs 68P and 68S fail, it could be easily replaced.

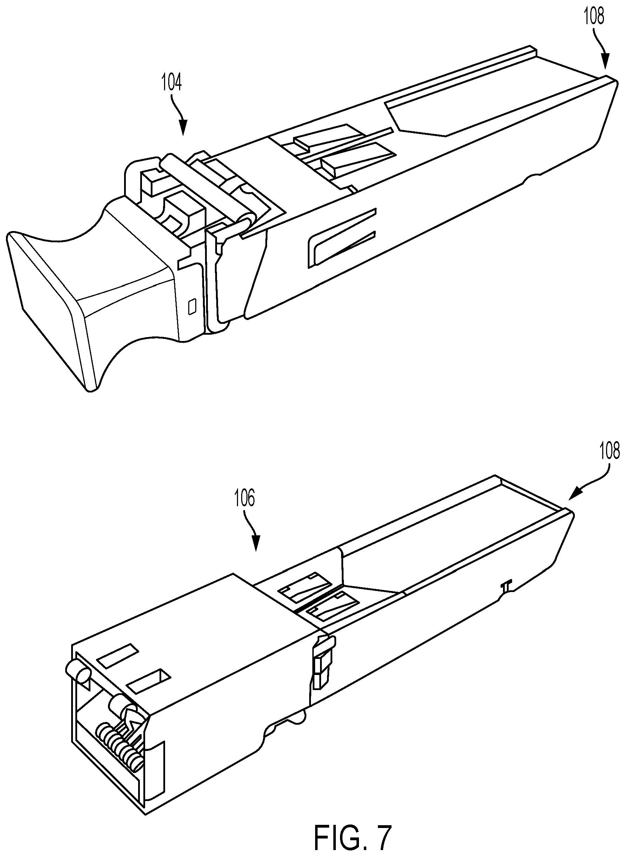

In quad-mode of operation, SCMs 68P and 68S receive communications transmitted by the primary and secondary FCPs via channel input connectors 70P and 70S, 72P and 72S, 74P and 74S, and 76P and 76S. Channel input connectors 70P and 70S are configured to be connected to a first bus channel of the primary and secondary FCPs, respectively. Channel input connectors 70P and 70S are electrically connected to primary and secondary SCMs 68P and 68S, thereby conductively communicating first-bus-channel communications received thereby to primary and secondary SCMs 68P and 68S, respectively. Each of primary and secondary SCMs 68P and 68S provides such first-bus-channel communications received to a first SFP connector C1 of four small form-factor pluggable (SFP) connectors C1-C4 on its face. Each of the four SFP connectors C1-C4 are configured to receive and provide bus-channel communications to an SFP module, which will be described below with reference to FIG. 7. In short, the SFP modules either electrically buffer or optically convert the communications provided thereto for transmission to other SCMs.

In a similar fashion, channel input connectors 72P and 72S are configured to be connected to a second bus channel of the primary and secondary FCPs, respectively. Channel input connectors 72P and 72S are electrically connected to primary and secondary SCMs 68P and 68S, thereby conductively communicating second-bus-channel communications received thereby to primary and secondary SCMs 68P and 68S, respectively. Each of primary and secondary SCMs 68P and 68S provides such second-bus-channel communications received to the second SFP connector C2 on its face.

Channel input connector pairs 74P/74S and 76P/76S are configured to be connected to a third bus channel and a fourth bus channel, respectively of the primary and secondary FCPs, respectively. Channel input connectors 74P and 76P and channel input connectors 74S and 76S are electrically connected to primary and secondary SCMs 68P and 68S, thereby conductively communicating third-bus-channel communications and fourth-bus-channel communications received thereby to primary and secondary SCMs 68P and 68S, respectively. Each of primary and secondary SCMs 68P and 68S provides such third-bus-channel communications and fourth-bus-channel communications received to the second SFP connectors C3 and C4 on its face, respectively.

Quad-mode SCM baseplate 66 facilitates communications generated on four bus channels to four other SCMs (or eight other SCMs if used in a redundant pair fashion). Should these other SCMs be located at distant locations, optical SFP modules can be used for providing optical communications over optical fiber. For SCMs that are located nearby, electrical SFP modules can be used for providing electrical communications over conductive wiring.

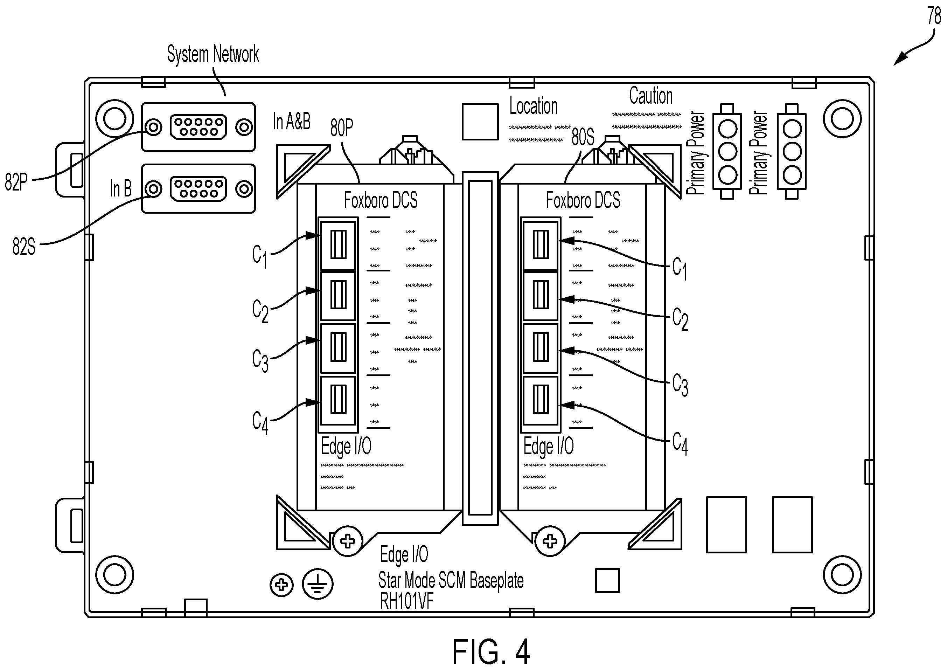

FIG. 4 is a front view of star-mode SCM baseplate 78 configured in a star-mode configuration. The star-mode configuration can be used to facilitate distribution of communications over a single bus channel of an FCP to up to four other SCMs. In FIG. 4, star-mode SCM baseplate 78 includes primary SCM 80P and secondary SCM 80S connected to star-mode SCM baseplate 78. Primary SCM 80P and secondary SCM 80S, in some embodiments, can be connected to star-mode SCM baseplate 78 via connectors, so that should one of primary and second SCMs 80P and 80S fail, it could be easily replaced.

In star-mode of operation, SCMs 80P and 80S receive communications transmitted by the primary and secondary FCPs via channel input connectors 82P and 82S. Channel input connectors 82P and 82S are configured to be connected to a single bus channel of the primary and secondary FCPs, respectively. Channel input connectors 82P and 82S conductively communicate transmissions received thereby to primary and secondary SCMs 80P and 80S, respectively. Each of primary and secondary SCMs 80P and 80S provides such communications received to all four SFP connectors C1-C4 on its face. Each of the four SFP connectors C1-C4 are configured to receive and provide channel communications to an SFP module, which will be described below with reference to FIG. 7. These star-configured SCMs 80P and 80S facilitate communications generated on a single bus channel to four other SCMs (or eight other SCMs if used in a redundant fashion). Should these other SCMs be located at distant locations, optical SFP modules can be used for providing optical communications over optical fiber. For SCMs that are located nearby, electrical SFP modules can be used for providing electrical communications over conductive wiring.

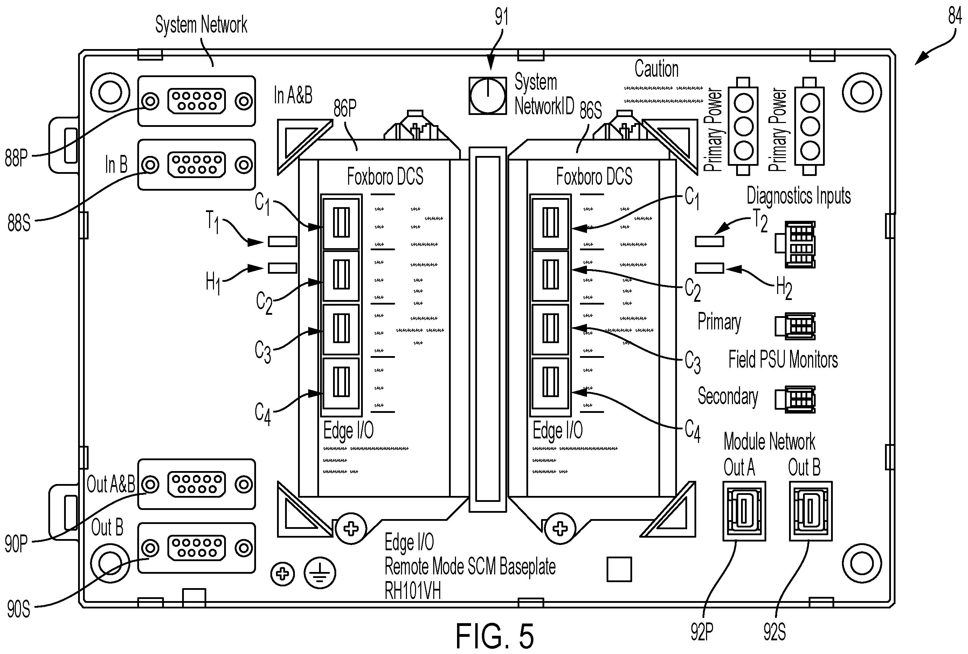

FIG. 5 is a front view of remote-mode SCM baseplate 84 with environment sensing capability and configured in a remote-mode configuration. In FIG. 5, remote-mode SCM baseplate 84 includes primary SCM 86P and secondary SCM 86S connected to remote-mode SCM baseplate 84. Primary SCM 86P and secondary SCM 86S, in some embodiments, can be connected to remote-mode SCM baseplate 84 via connectors, so that should one of primary and second SCMs 86P and 86S fail, it could be easily replaced. In the remote-mode configuration, primary and secondary SCMs 86P and 86S receive communications transmitted by the primary and secondary FCPs either via channel input connectors 88P and 88S or via SFP connectors C1, which have SFP modules configured to receive either optical signals or electrical signals. Each of primary and secondary SCMs 86P and 86S can be configured to relay the communications received to up to three other SCMs (or up to six other SCMs if configured as redundant pairs of SCMs). Each of primary SCM 86P and secondary SCM 86S can relay the communications received to such other SCMs either via channel output connectors 90P and 90S on remote-mode SCM baseplate 84 or via SFP connectors C2-C4 on its face.

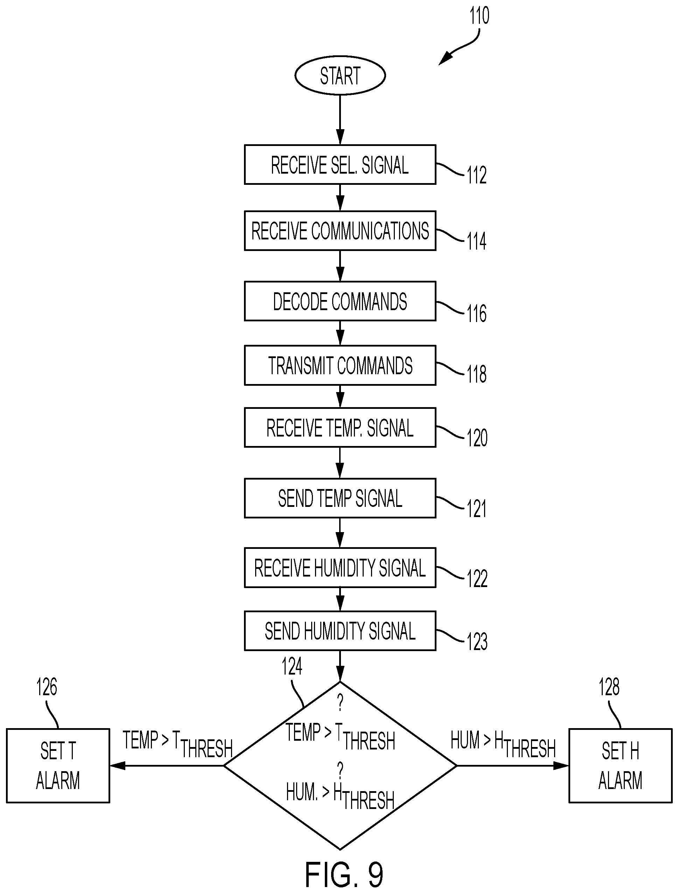

Remote-mode SCM baseplate 84 includes temperature sensors T1 and T2 and humidity sensors H1 and H2. Temperature sensor T1 is a primary temperature sensor, and temperature sensor T2 is a secondary temperature sensor. Secondary temperature sensor T2 will be used in an event in which primary temperature sensor T1 is non-responsive, damaged, or otherwise inoperative. Humidity sensor H1 is a primary humidity sensor, and humidity sensor H2 is a secondary humidity sensor. Secondary humidity sensor H2 will be used in an event in which primary humidity sensor H1 is non-responsive, damaged, or otherwise inoperative. When remote-mode SCM baseplate 84 is installed in a remote junction box, temperature sensors T1 and T2 and humidity sensors H1 and H2 will be configured to measure temperature and humidity of such a remote junction box. Temperature sensors T1 and T2 and humidity sensors H1 and H2 are configured to send the temperature signal to primary and secondary SCMs 86P and 86S. Each of temperature sensors T1 and T2 is configured to generate a temperature signal indicative of the temperature of the environment within the remote field junction box. Each of humidity sensors H1 and H2 is configured to generate a humidity signal indicative of the humidity of the environment within the field junction box. Temperature sensors T1 and T2 and humidity sensors H1 and H2 will be described in more detail below, with reference to FIGS. 8 and 9.

Not only can remote-mode SCM baseplate 84 relay communications received to other SCMs, but primary and secondary SCMs 86P and 86S can also decode the communications received to identify a subset of the commands that correspond to addresses of field sensors S and actuators A that are controlled by primary and secondary SCMs 86P and 86S. Such addresses of field sensors S and actuators A are within the set of addresses of remote-mode SCM baseplate 84. Address selection switch 91 is used, for example, to indicate the set of addresses *(i.e.,* in an address space) corresponding to remote-mode SCM baseplate 84. For example, address selection switch 91 can select from among four address spaces corresponding to four distinct sets of addresses.

After identifying the subset of commands that correspond to addresses of field sensors S and actuators A that are controlled by primary and secondary SCMs 86P and 86S, primary and secondary SCMs 86P and 86S transmit the subset of the commands to the subset of the plurality of field sensors S and/or actuators A that are controlled thereby. In this way, remote-configured SCM baseplate 84 can be used to control local field sensors S and/or actuators A connected thereto as well as to relay communications that include commands addressed to other field sensors and/or actuators controlled by another SCM. Such other commands addressed to other field sensors and/or actuators controlled by another SCM reside in another address space - not within the set of addresses of remote-mode SCM baseplate 84. The subset of commands is electrically transmitted via command output connectors 92P and 92S (depicted in FIG. 5). The various configurations of SCMs offer much flexibility in configuring a control system for an industrial process, as will be shown below with reference to FIGS. 8-11.

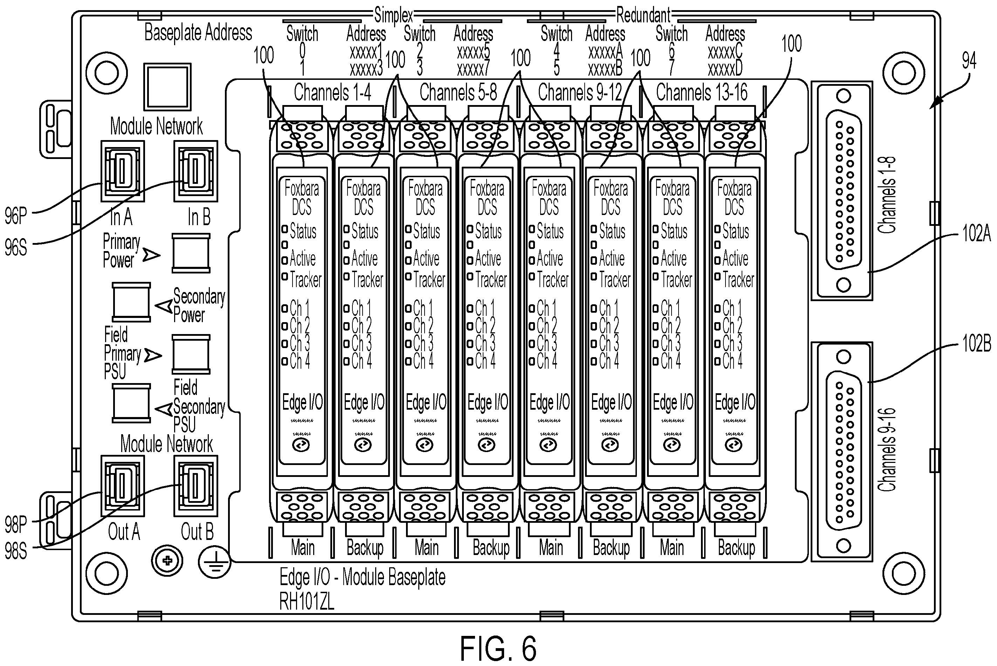

FIG. 6 is a front view of a Universal Input/Output Module (UIOM) baseplate for translating commands to and from field sensors and actuators. In FIG. 6, UIOM baseplate 94 includes command input connectors 96P and 96S which are configured to be electrically connected to command output connectors 92P and 92S (depicted in FIG. 5), respectively, of an SCM, such as SCM 86P and 86S. Command input connectors 96A and 96B are therefore configured to receive the electrical commands transmitted by SCMs 86P and 86S of remote-mode SCM baseplate 84 (depicted in FIG. 5). UIOM baseplate 94 also has command output connectors 98A and 98B which can be used to relay the commands received at command input connectors 96A and 96B to command output connectors 98A and 98B, thereby facilitating daisy-chaining multiple UIOM baseplates together.

UIOM baseplate 94 is configured to receive a plurality of UIOMs 100, each of which is capable of providing four individually configurable control channels for field sensors S and/or actuators A connected thereto. Each of the plurality of individually configurable control channels can be configured to translate the commands to a sensor/actuator protocol associated with a corresponding one of the field sensors S and/or actuators A connected thereto via sensor/actuator connectors 102A and 102B.

FIG. 7 is a perspective view of examples of small form-factor pluggable (SFP) modules. In FIG. 7, optical SFP module 104 and electrical SFP module 106 are depicted. Each of optical SFP module 104 and electrical SFP module 106 is configured to be received within one of the SFP connectors C1-C4 on the face of an SCM, such as SCM 68P or SCM 68S (depicted in FIG. 3). Each of optical SFP module 104 and electrical SFP module 106 makes electrical connection with the SCM which receives it via an electrical interface 108 at a received end of the SFP module. Optical SFP module 104 is configured to provide an optical transceiver to interface with an optical fiber at an end opposite to the received end of optical SFP module 104. Electrical SFP module 106 is configured to provide an electrical transceiver to interface with electrical conductors at an end opposite to the received end of electrical SFP module 106.

FIG. 8 is a block diagram of an example of a field junction box with environmental monitoring capability. In FIG. 8, field junction box 40 as depicted in FIG. 1 will be described, although it should be understood that the environmental monitoring capability shown and described can be provided in any junction box described and illustrated herein, including junction boxes 26, 46 and 52. In FIG. 8, field junction box 40 is configured to provide a communications interface between a control-room junction box and another remote junction box as well as between the control-room junction box and sixty-four field sensors S and actuators A connected to remote junction box 40. As such, field junction box 40 includes remote-mode SCM baseplate 84 and UIOM baseplates 94A, 94B, 94C, and 94D. Remote-mode SCM baseplate 84 includes primary and secondary SCMs 86A and 86B, address selection switch 91, SFP connectors C1-C4, command output connectors 92P and 92S, temperature sensors T1 and T2, and humidity sensors H1 and H2.

Remote-mode SCM baseplate 84 optically receives communications from the control-room junction box via optical fibers 32P and 32S. To do so, SFP optical modules 104 (depicted in FIG. 7), which are connected to SFP connectors C1 of primary and secondary SCMs 86P and 86S, provide optical to electrical conversion between optical fibers 32P and 32S and primary and secondary SCMs 86P and 86S. Remote-mode SCM baseplate 84 also optically transmits communications to the control-room junction box via optical fibers 32P and 32S using SFP optical modules 104.

Remote-mode SCM baseplate 84 optically relays the communications received from the control-room junction box to another field junction box via optical fibers 38P and 38S. To do so, SFP optical modules 104, which are connected to SFP connectors C2 of primary and secondary SCMs 86P and 86S, provide optical to electrical conversion between optical fibers 38P and 38S and primary and secondary SCMs 86P and 86S. Remote-mode SCM baseplate 84 also optically receives communications from the other field junction box via optical fibers 38P and 38S using SFP optical modules 104, thereby facilitating communications between the control-room junction box and the other field junction box.

Address selection switch 91 is configured to indicate a set of addresses associated with commands associated with addresses within the indicated set of addresses to be decoded by remote-mode SCM baseplate 84. Such commands are included in the communications received from the control-room junction box. For example, address selection switch 91 can be configured to generate a selection signal indicative of one of a plurality of distinct sets of addresses (e.g., one of two, four, eight, etc.). Address selection switch 92 transmits such a selection signal to primary and secondary SCMs 86P and 86S. Primary and secondary SCMs 86P and 86S then decode the commands that are associated with the addresses within the indicated set of addresses. Primary and secondary SCMs 86P and 86S then transmit the decoded commands to UIOM baseplates 94A, 94B, 94C, and 94D.

Remote-mode SCM baseplate 84 is connected to UIOM baseplates 94A, 94B, 94C, and 94D in daisy-chain fashion. Such daisy-chain configuration is obtained by electrically connecting: command output connectors 92P and 92S of remote-mode SCM baseplate 84A with command input connectors 96A and 96B of UIOM baseplate 94A; command output connectors 98P and 98S of UIOM baseplate 94A with command input connectors 96A and 96B of UIOM baseplate 94B; command output connectors 98P and 98S of UIOM baseplate 94B with command input connectors 96A and 96B of UIOM baseplate 94B; and command output connectors 98P and 98S of UIOM baseplate 94C with command input connectors 96A and 96B of UIOM baseplate 94D. Each of UIOM baseplates 94A, 94B, 94C, and 94D is then connected, via sensor/actuator connectors 102A and 102B, to sixteen field sensors S and/or actuators A. Sensor/actuator connectors 102A and 102B have a plurality of electrical terminals configured to provide such connections with the sixteen field sensors S and/or actuators connected thereto.

Temperature sensors T1 and T2 are connected to remote-mode SCM baseplate 84 so as to monitor an environment within field junction box 40. Each of temperature sensors T1 and T2 is configured to generate a temperature signal indicative of the temperature of the environment within field junction box 40. Each of temperature sensors T1 and T2 is further configured to send the temperature signal to primary and secondary SCMs 86P and 86S without using any of the plurality of the electrical terminals of any of sensor/actuator connectors 102A and 102B of UIOMs 94A, 94B, 94C, and 94D. In some embodiments, for example, temperature sensors T1 and T2 can have a dedicated wired connection to primary and secondary SCMs 86P and 86S. In other embodiments, for example, temperature sensors T1 and T2 can share a dedicated environment-sensor connection bus that runs to primary and secondary SCMs 86P and 86S. In these ways, the temperature signals are not associated with any of the addresses within the indicated set of addresses. Although two temperature sensors are depicted in the example embodiment disclosed, one or more than two temperature sensors could be provided in other embodiments.

Each of primary and secondary SCMs 86P and 86S is configured to make a comparison between the temperature signal(s) received and a high-temperature threshold. Each of primary and secondary SCMs 86P and 86S can then set a temperature alarm in response to the comparison indicating that the temperature signal(s) is indicative of the temperature of the environment within field junction box 40 exceeding the high-temperature threshold. Such a high-temperature threshold can be included in the communications received from the control-room junction box, for example. In some embodiments, each of primary and secondary SCMs 86P and 86S has a default high-temperature threshold that is used if the control-room junction box doesn't override the default high-temperature threshold.

Similarly, humidity sensors H1 and H2 are connected to remote-mode SCM baseplate 84 so as to monitor an environment within field junction box 40. Each of humidity sensors H1 and H2 is configured to generate a humidity signal indicative of a humidity of the environment within field junction box 40. Each of humidity sensors H1 and H2 is further configured to send the humidity signal to primary and secondary SCMs 86P and 86S without using any of the plurality of the electrical terminals of any of sensor/actuator connectors 102A and 102B of UIOMs 94A, 94B, 94C, and 94D. In some embodiments, for example, humidity sensors H1 and H2 can have a dedicated wired connection to primary and secondary SCMs 86P and 86S. In other embodiments, for example, humidity sensors H1 and H2 can share the dedicated environment-sensor connection bus that runs to temperature sensors T1 and T2 and to primary and secondary SCMs 86P and 86S. In these ways, the humidity signals are not associated with any of the addresses within the indicated set of addresses. Although two humidity sensors are depicted in the example embodiment disclosed, one or more than two humidity sensors could be provided in other embodiments.

Each of primary and secondary SCMs 86P and 86S is configured to make a comparison between the humidity signal(s) received and a high- humidity threshold. Each of primary and secondary SCMs 86P and 86S can then set a humidity alarm in response to the comparison indicating that the humidity signal(s) is indicative of the humidity of the environment within field junction box 40 exceeding the high- humidity threshold. Such a high-humidity threshold can be included in the communications received from the control-room junction box, for example. In some embodiments, each of primary and secondary SCMs 86P and 86S has a default high- humidity threshold that is used if the control-room junction box doesn't override the default high- humidity threshold.

FIG. 9 is a flow chart of a method for monitoring temperature and humidity of a field junction box while providing a communications interface between a Field Control Processor (FCP) and a plurality of field sensors and/or actuators. In FIG. 9, method 110 is described from a vantage point of primary SCM 86P of remote-mode SCM baseplate 84 (depicted in FIG. 8). Method 110 begins at step 112, where a selection signal is received from an address selection switch, the selection signal being indicative of a set of addresses associated with commands to be decoded by primary SCM 86P. Each of the indicated set of addresses is associated with a corresponding one of a plurality of electrical terminals of UIOM baseplates 94A, 94B, 94C, and 94D connected to remote-mode SCM baseplate 84. Each of the plurality of electrical terminals is configured to electrically connect to a corresponding one of the plurality of field sensors S and/or actuators A.

Then, method 110 advances to step 114, where communications are received from another SCM baseplate or from an FCP. The communications include the commands associated with addresses within the indicated set of addresses. Then, method 110 advances to step 116, where the commands that are associated with the addresses within the indicated set of addresses are decoded. Then, method 110 advances to step 118, where the decoded commands are transmitted to UIOM baseplates 94A, 94B, 94C, and 94D connected to remote-mode SCM baseplate 84. Method 110 then advances to step 120, where a temperature signal is received from temperature sensor T1 and/or T2 connected to remote-mode SCM baseplate 84. The temperature signal is indicative of the temperature of the environment within field junction box 40. Method 110 then advances to step 121, where remote-mode SCM baseplate 84 sends a signal indicative of temperature to the FCP. Such communication with the FCP can be either unsolicited or in response to a request from the FCP for the signal indicative of temperature. Method 110 then advances to step 122, where a humidity signal is received from humidity sensor H1 and/or H2 connected to remote-mode SCM baseplate 84. The humidity signal is indicative of humidity of an environment within field junction box 40. Method 110 then advances to step 123, where remote-mode SCM baseplate 84 sends a signal indicative of humidity to the FCP. Such communication with the FCP can be either unsolicited or in response to a request from the FCP for the signal indicative of humidity.

Method 110 then advances to step 124, where temperature and humidity of the environment within field junction box 40, as indicated by the temperature and humidity signals, are compared with high-temperature and high-humidity thresholds. If, at step 124, the temperature of the environment within field junction box 40 exceeds the high-temperature threshold, then method 110 advances to step 126, where a temperature alarm is set. In some embodiments, such a temperature alarm can also be immediately communicated to the FCP. In other embodiments, such a temperature alarm can be communicated to the FCP in response to a request from the FCP. If, at step 124, the humidity of the environment within field box 40 exceeds the high-humidity threshold, then method 110 then advances to step 128, where a humidity alarm is set. In some embodiments, such a humidity alarm can be also immediately communicated to the FCP. In other embodiments, such a humidity alarm can be communicated to the FCP in response to a request from the FCP.

Although environmental monitoring has been described with reference to FIGS. 8 and 9 using remote-mode SCM baseplate 84, quad-mode SCM baseplate 66 (shown in FIG. 3) and star-mode SCM baseplate (shown in FIG. 4) are also equipped with temperature sensors T1 and T2 and with humidity sensors H1 and H2. Quad-mode SCM baseplate 66 and star-mode SCM baseplate are also configured to perform the same functions regarding temperature and humidity as is described above for remote-mode SCM baseplate 84.

While the various aspects of the disclosure have been described with reference to an example embodiment(s), it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure and example embodiments not be limited to the particular embodiment(s) disclosed, but that the disclosure and examples herein at least include all embodiments falling within the scope of the appended claims.

Further aspects of the invention are provided by the subject matter of the following clauses:
Clause 1. A field junction box for providing a communication interface between a Field Control Processor (FCP) and a plurality of field devices, the plurality of field devices comprising two or more devices selected from the group consisting of field sensors and actuators, the field junction box comprising:
   a System Communications Module (SCM) baseplate, the SCM baseplate having an address selection switch that is configured to indicate a set of addresses associated with commands to be decoded by the SCM baseplate;
   one or more Universal Input/Output Module (UIOM) baseplates connected to the SCM baseplate, the one or more UIOM baseplates having a plurality of electrical terminals, each electrical terminal of the plurality of electrical terminals associated with a corresponding address in the indicated set of addresses, each configured to electrically connect to a corresponding one of the plurality of field devices,
   wherein the SCM baseplate is configured to:
      receive communications from the FCP, the communications including the commands associated with addresses within the indicated set of addresses;
      decode the commands that are associated with the addresses within the indicated set of addresses; and
      transmit the decoded commands to the one or more UIOM baseplates; and
      a temperature sensor connected to the SCM baseplate and configured to generate a temperature signal indicative of a temperature of an environment within the field junction box, the temperature sensor further configured to send the temperature signal to the SCM baseplate without using any of the plurality of the electrical terminals.
Clause 2. The field junction box of Clause 1, wherein the temperature sensor comprises a primary temperature sensor and the temperature signal comprises a primary temperature signal, the field junction box further comprising:
   a secondary temperature sensor connected to the SCM baseplate and configured to generate a secondary temperature signal indicative of the temperature of the environment within the field junction box, the secondary temperature sensor further configured to send the secondary temperature signal via the connector without using any of the plurality of the electrical terminals.
Clause 3. The field junction box of Clause 1 or Clause 2, further comprising:
   a humidity sensor coupled to the SCM baseplate and configured to generate a humidity signal indicative of a humidity of the environment within the field junction box, the humidity sensor further configured to send the humidity signal to the SCM baseplate without using any of the plurality of the electrical terminals.
Clause 4. The field junction box of Clause 3, wherein the SCM is configured to make a comparison between the humidity signal and a high-humidity threshold, and to set a humidity alarm in response to the comparison indicating that the humidity signal is indicative of the humidity of the environment within the field junction box exceeding the high-humidity threshold.
Clause 5. The field junction box of Clause 3 or Clause 4, wherein:
   the humidity sensor is not associated with any of the addresses within the indicated set of addresses.
Clause 6. The field junction box of any of Clauses 3 to 5, wherein the humidity sensor comprises a primary humidity sensor and the humidity signal comprises a primary humidity signal, the field junction box further comprising:
   a secondary humidity sensor connected to the SCM baseplate and configured to generate a secondary humidity signal indicative of the humidity of the environment within the field junction box, the secondary humidity sensor further configured to send the secondary humidity signal via the connector without using any of the plurality of the electrical terminals.
Clause 7. The field junction box of any of Clauses 1 to 6, wherein the SCM is configured to make a comparison between the temperature signal and a high-temperature threshold, and to set a temperature alarm in response to the comparison indicating that the temperature signal is indicative of the temperature of the environment within the field junction box exceeding the high-temperature threshold.
Clause 8. The field junction box of any of Clauses 1 to 7, wherein the one or more UIOM baseplates include:
   a plurality of Universal Input/Output Modules (UIOMs) configured to provide a plurality of individually configurable control channels between the SCM and the plurality of field devices connected to the plurality of electrical terminals, each of the plurality of individually configurable control channels configured to translate the commands to a sensor/actuator protocol corresponding to a corresponding one of the plurality of field devices connected to the plurality of electrical terminals.
Clause 9. The field junction box of Clause 8, wherein the plurality of UIOMs are arranged in primary/secondary pairs, thereby providing redundant translation of the commands to sensor/actuator protocols corresponding to the plurality of field devices connected to the plurality of electrical terminals.
Clause 10. The field junction box of any of Clauses 1 to 9, wherein the SCM baseplate is further configured to:
   relay communications received from the FCP to one or more other remote field junction boxes.
Clause 11. The field junction box of any of Clauses 1 to 10, wherein the SCM baseplate includes:
   primary and secondary SCMs, which provide redundant operation of functions that the SCM baseplate is configured to perform.
Clause 12. The field junction box of any of Clauses 1 to 11, wherein:
   the temperature sensor is not associated with any of the addresses within the indicated set of addresses.
Clause 13. A field junction box for providing a communication interface between a Field Control Processor (FCP) and a plurality of field devices, the plurality of field devices comprising two or more devices selected from the group consisting of field sensors and actuators, the field junction box comprising:
   a System Communications Module (SCM) baseplate configured to receive an indication of a set of addresses associated with commands to be decoded by the SCM baseplate;
   a plurality of electrical terminals, each associated with a corresponding address in the indicated set of addresses, each configured to electrically connect to a corresponding one of the plurality of field devices,
   wherein the SCM baseplate is configured to:
      receive communications from the FCP, the communications including the commands associated with addresses within the indicated set of addresses;
      decode the commands that are associated with the addresses within the indicated set of addresses; and
      transmit the decoded commands to corresponding ones of the plurality of field devices via the plurality of electrical terminals; and
      a temperature sensor connected to the SCM baseplate and configured to generate a temperature signal indicative of a temperature of an environment within the field junction box, the temperature sensor further configured to send the temperature signal via the connector without using any of the plurality of the electrical terminals.
Clause 14. The field junction box of Clause 13, wherein:
   the temperature sensor is not associated with any of the addresses within the indicated set of addresses.
Clause 15. The field junction box of Clause 13 or Clause 14, further comprising:
   a humidity sensor coupled to the SCM baseplate and configured to generate a humidity signal indicative of a humidity of the environment within the field junction box, the humidity sensor further configured to send the humidity signal to the SCM baseplate without using any of the plurality of the electrical terminals.
Clause 16. The field junction box of Clause 15, wherein:
   the humidity sensor is not associated with any of the addresses within the indicated set of addresses.
Clause 17. The field junction box of Clause 15 or Clause 16, wherein the humidity sensor comprises a primary humidity sensor and the humidity signal comprises a primary humidity signal, the field junction box further comprising:
   a secondary humidity sensor connected to the SCM baseplate and configured to generate a secondary humidity signal indicative of the humidity of the environment within the field junction box, the secondary humidity sensor further configured to send the secondary humidity signal via the connector without using any of the plurality of the electrical terminals.
Clause 18. The field junction box of any of Clauses 13 to 17, wherein the temperature sensor comprises a primary temperature sensor and the temperature signal comprises a primary temperature signal, and wherein the field junction box further comprises:
   a secondary temperature sensor connected to the SCM baseplate and configured to generate a secondary temperature signal indicative of the temperature of the environment within the field junction box, the secondary temperature sensor further configured to send the secondary temperature signal via the connector without using any of the plurality of the electrical terminals.
Clause 19. A method for monitoring temperature of a field junction box that houses a System Communications Module (SCM) baseplate, the method comprising:
   indicating a set of addresses associated with commands to be decoded by the SCM baseplate;
   associating each of addresses within the indicated set of addresses with a corresponding one of a plurality of electrical terminals of one or more Universal Input/Output Module (UIOM) baseplates connected to the SCM baseplate, each of the plurality of electrical terminals configured to electrically connect to a corresponding one of the plurality of field devices,
   receiving, via the SCM baseplate, communications from a Field Control Processor (FCP), the communications including the commands associated with addresses within the indicated set of addresses;
   decoding, via the SCM baseplate, the commands that are associated with the addresses within the indicated set of addresses;
   transmitting, via the SCM baseplate, the decoded commands to the one or more UIOM baseplates; and
   generating, via a temperature sensor connected to the SCM baseplate, a temperature signal indicative of a temperature of an environment within the field junction box, the temperature sensor further configured to send the temperature signal to the SCM baseplate without using any of the plurality of the electrical terminals.
Clause 20. The method of Clause 19, further comprising monitoring humidity of the field junction box by generating, via a humidity sensor coupled to the SCM baseplate, a humidity signal indicative of a humidity of the environment within the field junction box, the humidity sensor further configured to send the humidity signal to the SCM baseplate without using any of the plurality of the electrical terminals.

## Claims

1. A field junction box for providing a communication interface between a Field Control Processor, FCP, and a plurality of field devices, the plurality of field devices comprising two or more devices selected from the group consisting of field sensors and actuators, the field junction box comprising:
a System Communications Module, SCM, baseplate, the SCM baseplate having an address selection switch that is configured to indicate a set of addresses associated with commands to be decoded by the SCM baseplate;
one or more Universal Input/Output Module, UIOM, baseplates connected to the SCM baseplate, the one or more UIOM baseplates having a plurality of electrical terminals, each electrical terminal of the plurality of electrical terminals being associated with a corresponding address in the indicated set of addresses, each being configured to electrically connect to a corresponding one of the plurality of field devices,
wherein the SCM baseplate is configured to:
receive communications from the FCP, the communications including the commands associated with addresses within the indicated set of addresses;
decode the commands that are associated with the addresses within the indicated set of addresses; and
transmit the decoded commands to the one or more UIOM baseplates; and
a temperature sensor connected to the SCM baseplate and configured to generate a temperature signal indicative of a temperature of an environment within the field junction box, the temperature sensor being configured to send the temperature signal to the SCM baseplate without using any of the plurality of the electrical terminals.

2. The field junction box of claim 1, wherein the temperature sensor comprises a primary temperature sensor and the temperature signal comprises a primary temperature signal, the field junction box comprising:
a secondary temperature sensor connected to the SCM baseplate and configured to generate a secondary temperature signal indicative of the temperature of the environment within the field junction box, the secondary temperature sensor being configured to send the secondary temperature signal via the connector without using any of the plurality of the electrical terminals.

3. The field junction box of claim 1 or claim 2, comprising:
a humidity sensor coupled to the SCM baseplate and configured to generate a humidity signal indicative of a humidity of the environment within the field junction box, the humidity sensor being configured to send the humidity signal to the SCM baseplate without using any of the plurality of the electrical terminals.

4. The field junction box of claim 3, wherein the SCM is configured to make a comparison between the humidity signal and a high-humidity threshold, and to set a humidity alarm in response to the comparison indicating that the humidity signal is indicative of the humidity of the environment within the field junction box exceeding the high-humidity threshold.

5. The field junction box of claim 3 or claim 4, wherein:
the humidity sensor is not associated with any of the addresses within the indicated set of addresses.

6. The field junction box of any of claims 3 to 5, wherein the humidity sensor comprises a primary humidity sensor and the humidity signal comprises a primary humidity signal, the field junction box comprising:
a secondary humidity sensor connected to the SCM baseplate and configured to generate a secondary humidity signal indicative of the humidity of the environment within the field junction box, the secondary humidity sensor being configured to send the secondary humidity signal via the connector without using any of the plurality of the electrical terminals.

7. The field junction box of any of claims 1 to 6, wherein the SCM is configured to make a comparison between the temperature signal and a high-temperature threshold, and to set a temperature alarm in response to the comparison indicating that the temperature signal is indicative of the temperature of the environment within the field junction box exceeding the high-temperature threshold.

8. The field junction box of any of claims 1 to 7, wherein the one or more UIOM baseplates include:
a plurality of Universal Input/Output Modules, UIOMs, configured to provide a plurality of individually configurable control channels between the SCM and the plurality of field devices connected to the plurality of electrical terminals, each of the plurality of individually configurable control channels being configured to translate the commands to a sensor/actuator protocol corresponding to a corresponding one of the plurality of field devices connected to the plurality of electrical terminals.

9. The field junction box of claim 8, wherein the plurality of UIOMs are arranged in primary/secondary pairs, thereby providing redundant translation of the commands to sensor/actuator protocols corresponding to the plurality of field devices connected to the plurality of electrical terminals.

10. The field junction box of any of claims 1 to 9, wherein the SCM baseplate is configured to:
relay communications received from the FCP to one or more other remote field junction boxes.

11. The field junction box of any of claims 1 to 10, wherein the SCM baseplate includes:
primary and secondary SCMs, which provide redundant operation of functions that the SCM baseplate is configured to perform.

12. The field junction box of any of claims 1 to 11, wherein:
the temperature sensor is not associated with any of the addresses within the indicated set of addresses.

13. A field junction box for providing a communication interface between a Field Control Processor, FCP and a plurality of field devices, the plurality of field devices comprising two or more devices selected from the group consisting of field sensors and actuators, the field junction box comprising:
a System Communications Module, SCM, baseplate configured to receive an indication of a set of addresses associated with commands to be decoded by the SCM baseplate;
a plurality of electrical terminals, each associated with a corresponding address in the indicated set of addresses, each being configured to electrically connect to a corresponding one of the plurality of field devices,
wherein the SCM baseplate is configured to:
receive communications from the FCP, the communications including the commands associated with addresses within the indicated set of addresses;
decode the commands that are associated with the addresses within the indicated set of addresses; and
transmit the decoded commands to corresponding ones of the plurality of field devices via the plurality of electrical terminals; and
a temperature sensor connected to the SCM baseplate and configured to generate a temperature signal indicative of a temperature of an environment within the field junction box, the temperature sensor being configured to send the temperature signal via the connector without using any of the plurality of the electrical terminals.

14. A method for monitoring temperature of a field junction box that houses a System Communications Module, SCM, baseplate, the method comprising:
indicating a set of addresses associated with commands to be decoded by the SCM baseplate;
associating each of addresses within the indicated set of addresses with a corresponding one of a plurality of electrical terminals of one or more Universal Input/Output Module, UIOM, baseplates connected to the SCM baseplate, each of the plurality of electrical terminals configured to electrically connect to a corresponding one of the plurality of field devices,
receiving, via the SCM baseplate, communications from a Field Control Processor, FCP, the communications including the commands associated with addresses within the indicated set of addresses;
decoding, via the SCM baseplate, the commands that are associated with the addresses within the indicated set of addresses;
transmitting, via the SCM baseplate, the decoded commands to the one or more UIOM baseplates; and
generating, via a temperature sensor connected to the SCM baseplate, a temperature signal indicative of a temperature of an environment within the field junction box, the temperature sensor being configured to send the temperature signal to the SCM baseplate without using any of the plurality of the electrical terminals.

15. The method of claim 14, comprising monitoring humidity of the field junction box by generating, via a humidity sensor coupled to the SCM baseplate, a humidity signal indicative of a humidity of the environment within the field junction box, the humidity sensor being configured to send the humidity signal to the SCM baseplate without using any of the plurality of the electrical terminals.
